# EUROPEAN PATENT APPLICATION

(11) **EP 0 651 144 A1**
(43) Date of publication of application: **03.05.1995**
(21) Application number: 92915514.1
(22) Date of filing: 26.06.1992
(51) Int. Cl.: F02C 3/30

(54) **METHOD FOR CONVERSION OF HEAT ENERGY INTO MECHANICAL ENERGY IN A GAS-TURBINE ENGINE, AND GAS-TURBINE ENGINE**

(30) Priority: 28.04.1992 RU 5035111
(71) Applicant: SMESHANNOE TOVARISCHESTVO "GERMES", Rosto-na-Donu, 344092 (SU)
(72) Inventor: RAKHMAILOV, Anatoly Mikhailovich, Bataisk, 346730 (RU); KOSTINSKY, Vadim Arkadievich, Rostov-na-Donu, 344038 (RU)
(74) Representative: von Füner, Alexander, Dr.
(86) International application number: RU9200126
(87) International publication number: WO9322547

(57) **Abstract**

The invention relates to the power industry, namely to conversion of the heat energy into mechanical energy in a gas-turbine engine and may be used in gas-turbine engines. The invention allows to increase the efficiency of the engine by decreasing the loss on mixing the heated working medium with the cooling agent. The thermodynamic state of the working medium introduced at least into the first turbine stage (8) is changed by expanding and spinning it, before the introduction, in relation to the longitudinal axis of the gas-turbine engine, with subsequent cooling of the working medium and changing its thermodynamic state. The cooling of the working medium with its changed thermodynamic state is affected by the air compressed up to a pressure at least equal to that of the working medium in the changed thermodynamic state. The gas-turbine engine has at least two turbine stages (8, 9) mounted in the through part, at least a double-stage compressor (3) and a heated working medium source (1) having a zone (H) of expansion and spinning of the heated medium and mounted behind it, a zone (2) for mixing the heated working medium with the cooling agent. The zone (2) for mixing the heated working medium with the cooling agent is connected to the outlet of the stage (5) of the compressor, the pressure after which at least equals the pressure of the working medium in the mixing zone (2).

## Description

### Field of the Invention

This invention relates generally to power engineering, and more particularly to a method of converting heat into mechanical energy in a gas turbine engine and to gas turbine engines for carrying out this method.

### Background of the Invention

There are known methods of converting heat energy into useful mechanical work in gas turbine engines in which net power output is increased either by increasing the temperature of working fluid before the turbine, or by reducing the temperature of oxidizer used to burn the fuel and generate a working fluid (cf., S. I. Lovinsky "Teoria aviatsionnykh dvigatelei", Mashinostroenie, Moscow, 1982, pp. 77 and 78). However, these methods fail to provide a tangible increase in engine efficiency and are detrimental to the environment because of large quantities of exhaust gases emitted to the outside.

There is also known a method of converting heat into mechanical energy in a gas turbine engines, comprising at least two turbine stages located in a flow-through passage and a source of heated working fluid in which the temperature of working fluid is changed by cooling and expansion (cf., SU, A, 1,560,749). This method involves stepwise expansion of the working fluid before expansion steps and admission of extra quantities of oxidizer to the combustion chamber. The fuel is burned before intermediate expansion step with a deficiency of oxygen and before the last expansion step with an excess of oxygen.

This prior art method fails to ensure a sufficiently high efficiency since a multi-step combustion of fuel does not reduce the demand of cooling gas. This in turn leads to a higher compressor demand and consequently to reduced over-all efficiency of the engine. In addition, combustion of rich fuel mixtures reduces the engine life due to deposition of soot. On the other hand, provision of a second combustion chamber for after-burning lean fuel mixtures overcomplicates the method.

Also known in the art is a gas turbine engine comprising at least two turbine stages located in a flow-through passage and a source of heated working fluid (cf., S. I. Lovinsky "Teoria aviatsionnykh dvigatelei" Mashinostroenie, Moscow, 1982, pp. 4 to 7).

Air is sucked in from the outside by a compressor and conveyed to the source of working fluid in the form of a combustion chamber into which a fuel is also fed. In the combustion chamber the air is split into two flows with one such flow used for burning the fuel and the other for adding to products of combustion to lower their temperature. The thus obtained heated working fluid expands in turbine stages to execute a useful work. Power of the gas turbine engine is partially expended to drive the compressor, whereas the rest of power constitutes the useful power of the engine. The useful power of gas turbine engine amounts to only a fraction of the power developed by the turbine stages. This power share is determined by a net efficiency of the prior art gas turbine engines which normally ranges from 0.3 to 0.4. The heretofore described engine has low efficiency not exceeding 30% and low net efficiency amounting to not more than 40% of the power developed by the turbine stages. Therefore, this engine suffers from low efficiency and low net power. Also, the engine discharges large quantities of exhaust gases detrimental to the environment.

In one more prior art method of converting heat into mechanical energy and a gas turbine engine for carrying out the method having at least two turbine stages located in a flow passage and a source of heated working fluid the thermodynamic conditions of working fluid are changed by expanding and swirling the flow relative to the longitudinal axis of the engine prior to admission to at least the first turbine stage followed by cooling of the working fluid with the thus changed thermodynamic state (PCT/SU 91/00198). The working fluid with changed thermodynamic parameters is cooled by used working fluid discharged from the first turbine stage. The working fluid gains kinetic energy and engine operation becomes more reliable thanks to expanding and swirling of the working fluid relative to the axis of the engine at high temperatures prior to admission to the first turbine stage. The working fluid is cooled by the fluid used in the first turbine stage after this fluid has been subjected to a change in its thermodynamic conditions. As a result, kinetic energy of the working fluid admitted to the first turbine stage grows substantially entailing a higher engine efficiency. Because the used working fluid serves as a coolant the accompanying advantages include an increase in heat capacity of working fluid to promote expansion in the turbine stage and a reduction in the quantity of exhaust gas (approximately by a factor of 2 to 4). At the same time, losses of heat associated with discharge of exhaust gases are reduced to result in partial recuperation of the heat of used working fluid. The engine is provided with an arrangement for expanding and swirling the flow of the heated working fluid relative to the longitudinal axis of the engine and an arrangement for conveying part of the working fluid used in the first turbine stage to cool the heated working fluid after its thermodynamic state has been changed by expansion and swirling.

It is important that along with the above advantages the method suffers from a drawback residing in that a substantial quantity of used working fluid is required for it to function as a coolant because it has a rather high temperature. This causes losses for mixing the heated working fluid with used working fluid which affect mixing and reduce efficiency of the engine. In addition, kinetic parameters of the used working fluid downstream of the first turbine stage do not allow the used working fluid to develop a high velocity at the point where it is mixed with the flow of heated working fluid. A substantial difference in the velocities of the heated and used working fluids leads to impact losses during mixing. Such impact losses negatively affect the engine efficiency.

The invention aims at providing a method of converting heat into mechanical energy in a gas turbine engine in which parameters of coolant used for cooling an expanded and swirled flow of heated working fluid ensure reduced losses for mixing the heated working fluid with coolant. The aim of the invention is attained by that in a method of converting heat into mechanical energy in a gas turbine engine having at least two turbine stages located in a flow-through passage and a source of heated working fluid the thermodynamic conditions of working fluid admitted to at least the first turbine stage are changed by expanding and swirling it relative to longitudinal axis of the gas turbine engine prior to admission followed by a subsequent cooling of the working fluid with the thus changed thermodynamic conditions. According to one specific feature of the invention, the working fluid with changed thermodynamic conditions is cooled by air fed under a pressure at least equal to the pressure of working fluid with changed thermodynamic conditions.

In this method the heated working fluid is cooled by a fluid having a temperature substantially lower than the temperature of the used working fluid. It is therefore possible to cool the heated working fluid by employing a substantially smaller quantity of coolant whereby losses for mixing the coolant with the flow of heated working fluid are reduced. It has to be noted also that kinetic parameters of air conveyed for cooling can be substantially higher than those of the used working fluid. One accompanying advantage is a smaller disbalance between velocities of the coolant and heated working fluid resulting in lower impact losses. In consequence, mixing can be intensified and engine efficiency can be increased.

Prior to feeding air for cooling this air is mixed with a liquid whose vapors have a heat capacity higher than the heat capacity of the air.

Mixing the air with liquid whose vapors have a heat capacity higher than the heat capacity of the air results in a higher heat capacity of the coolant allowing to reduce the quantity of such coolant for attaining the desired temperature of heated working fluid. In consequence, reduced quantity of coolant makes mixing more efficient and consequently enhances the efficiency of the engine.

Before admission of the cooling air this air is mixed with the used working fluid of the first turbine stage.

Mixing the air with used working fluid affords to reduce the quantity of atmospheric air conveyed from the compressor resulting in reduced weight and size of the compressor and lower compressor power demand. In addition, air cleaning system can be simplified. This can be a major advantage when the gas turbine engine draws a dust-laden air.

Prior to feeding the used working fluid of the first turbine stage for mixing with cooling air the used working fluid of the first turbine stage is mixed with a liquid whose vapors have a heat capacity higher than the heat capacity of the used working fluid.

This increases the heat capacity of coolant allowing to reduce the quantity of coolant necessary for attaining the desired temperature of heated working fluid to result in more efficient mixing and higher engine efficiency.

The working fluid is cooled by air and used working fluid of the first turbine stage with flows of air and used working fluid admitted separately. The flow of air is admitted to a space between the flows of heated and used working fluid.

As the dynamic parameters of air, such as velocity and pressure, are higher than those of the used working fluid and air temperature is lower, losses associated with mixing in the proposed method are lowered.

In any modified form of the proposed method it is advisable to use instead of liquid serving as a coolant of the heated working fluid, or add to the coolant, a vapor having a heat efficiency higher than the heat efficiency of the coolant or one of its ingredients (air, used working fluid or liquid). An accompanying advantage is expressed not only in enhanced heat capacity of the coolant of the used working fluid, but also in more thorough mixing of the working fluid with the coolant and reduced susceptibility of hot turbine blades to damaging drops of liquid after separation of flame in the source of heated working fluid.

It is preferable to cool the air prior to its admission to the mixing zone to lower the demand of cooling air and reduce compressor power.

The aim of the invention is also attained by that in a gas turbine engine comprising at least a two-stage compressor and a source of heated working fluid having a zone for expanding and swirling the heated fluid followed by a zone for mixing the heated working fluid with coolant, this mixing zone communicating with an outlet of compressor stage where the pressure is at least equal to the pressure of working fluid in the mixing zone.

This construction of gas turbine engine ensures cooling of the heated working fluid with modified thermodynamic conditions by air whose temperature is not only lower than the temperature of the working fluid used in the turbine stage, but also lower than the temperature of air used for generating the heated working fluid. A resulting advantage is substantially reduced quantity of coolant necessary for cooling the heated working fluid. The velocity of air flow drawn from one of compressor stages is much closer to the velocity of the flow of working fluid subsequent to its expansion and swirling as compared with kinetic parameters of the used working fluid. A smaller quantity of coolant and its higher velocity promote reduction in mixing losses, mainly the impact loss during mixing which is again favorable for increasing the over-all efficiency of the engine.

The proposed engine has an additional mixing zone located outside the source of heated working fluid having an inlet communicating with outlet of compressor stage where the pressure is at least equal to the pressure of working fluid in the mixing zone and with a source of liquid whose vapors have a heat capacity higher than the heat capacity of air, and an outlet communicating with the mixing zone.

Provision of additional mixing zone improves conditions for mixing oxidizer with liquid and allows to reduce the danger of direct discharge of the liquid against hot blades of the turbine stage (normally, the temperature of these blades is in the region of 1000 C).

The inlet of the additional mixing zone communicates with the outlet of the first turbine stage. Such an arrangement provides more favorable conditions for vigorous mixing of the coolant with liquid vapors thanks to high temperature of the used working fluid.

The zone for mixing heated working fluid with coolant has two inlets of which the first communicates with the outlet of compressor stage where the pressure is at least equal to the pressure of working fluid in the mixing zone, and the second communicates with the outlet of the first turbine stage. The first inlet of mixing zone communicates with a section of the mixing zone located between the longitudinal axis of mixing zone and second inlet of the mixing zone.

The above construction ensures a laminar flow mixing of three cooling fluids of balanced velocities and temperatures resulting in substantial mixing losses.

### Brief Description of the Drawings

The invention will now be described in greater detail with reference to specific embodiments thereof taken in conjunction with the accompanying drawings, in which:
Fig. 1 is a diagrammatic view of a gas turbine engine illustrating the manner in which the proposed method of converting heat into mechanical power can be carried out;
Fig. 2 is a longitudinal sectional view of the proposed gas turbine engine;
Fig. 3 is an enlarged section taken along line III-III in Fig. 2;
Fig. 4 is a section taken along line IV-IV in Fig. 3; and
Fig. 5 is a longitudinal sectional representation of a modified form of the proposed gas turbine engine.

### Detailed Description of the Invention

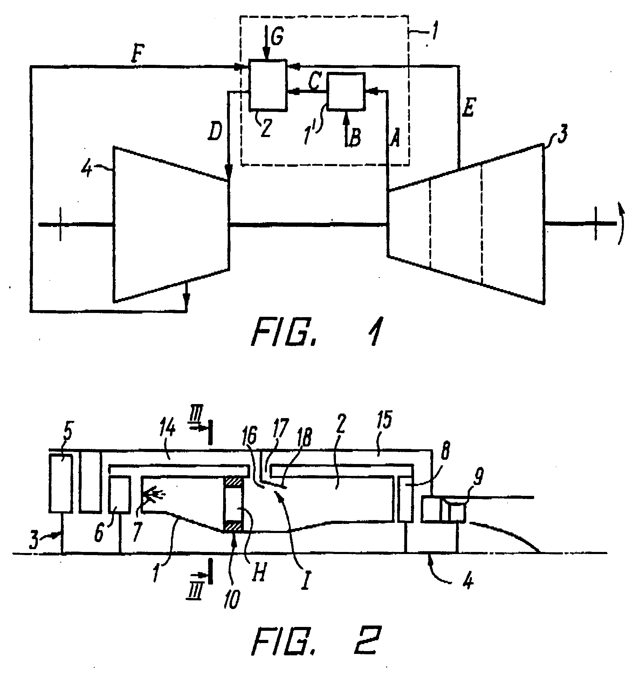

The proposed method of converting heat into mechanical energy in a gas turbine engine is carried out in the following manner. A heated working fluid is conveyed from a source 1 of heated working fluid (Fig. 1) to a mixing zone 2 of the source 1 of heated working fluid located immediately before inlet of first turbine stage. Positioned before the mixing zone 2 is an arrangement (not shown) for expanding and swirling the flow of heated working fluid relative to the longitudinal axis of the gas turbine engine.

This arrangement for changing the thermodynamic conditions of heated working fluid prior to its cooling can have the form of a nozzle diaphragm. Used as the source 1 of heated working fluid is a combustion chamber 1 to which an oxidizer, such as air from compressor 3, is admitted as shown by arrow A, and fuel is fed as indicated by arrow B. The compressor 3 has at least two stages. In the source 1 of heated liquid fluid the fuel and oxidizer are mixed in any known suitable manner having no bearing on the subject matter of the invention and the air-fuel mixture is ignited and burned in any known suitable arrangements (not shown). The heated working fluid conveyed to mixing zone 2 flows through expansion and swirling arrangement as indicated in Fig. 1 by arrows C and D, and is then directed to turbine 4 to be subjected to expansion in the first turbine stage (not shown). The heated working fluid executes useful work and is cooled to transfer part of its energy to the turbine wheel of the first turbine stage.

Air under a pressure at least equal to the pressure of heated working fluid in the mixing zone 2 is conveyed along path indicated by arrow E to the mixing zone 2. Air with such parameters can be drawn from any intermediate stage of compressor 3, for example, from the first stage. It is obvious that the air can be drawn even from the last compressor stage, although this is less advantageous. The lower is the stage of compressor from which air is drawn for cooling the expanded and swirled flow of heated working fluid, the lower is the temperature of this air and the less energy is consumed for its compression.

As compressed air is admitted to the mixing zone 2, it is mixed with the flow of heated working fluid to cool this flow to a temperature ensuring optimized use in the first turbine stage. A temperature of about 1700 K can be ensured when feeding a relatively small quantity of air in view of the fact that this air is not subjected to high heat in the first or intermediate stage of the compressor. This circuit for cooling the heated working fluid leads to a substantial increase in efficiency firstly by virtue of the fact that reduced coolant demand results in lower losses for mixing. Secondly, admission of a smaller quantity of air promotes reduction in compressor demand and provides other accompanying advantages.

Alternatively, part of used working fluid escaping from the outlet of the first stage of turbine 4 is returned to mixing zone 2 as shown by arrow F. Therewith, expanded and swirled flow of heated working fluid is cooled by air drawn from an intermediate stage of compressor 3 and by used working fluid conveyed from the outlet of the first stage of compressor 4. This in turn affords to reduce the quantity of atmospheric air drawn from the compressor. Accordingly, it becomes possible to reduce the size and weight of the compressor and lower the compressor demand. Another substantial advantage is simplified air cleaning system when the gas turbine engine sucks in a dust-laden air.

It is also possible to convey to the mixing zone 2 liquid vapors of thermal capacity substantially higher than the heat capacity of air, such as vapors of water, as indicated in Fig. 1 by arrow G. Water is preliminarily mixed with air and this mixture is conveyed to the mixing zone 2. Thanks to the high temperature of air at the outlet from the compressor stage mixing this air (normally by spraying liquid) with liquid generates liquid vapors to prevent damage to turbine blades by protecting the blades against impact of liquid during flame separation. It is possible to heat the liquid to obtain liquid vapors mixed with air and conveyed to the mixing zone. Another possibility is combined use of liquid and working fluid used in the first turbine stage. Here, the air is at first mixed with liquid and then the used working fluid is added to the mixture, or vice versa. The first alternative is preferable at a sufficiently high temperature of air used for cooling and/or at a sufficiently low vaporization temperature of the liquid (or when using, for example, hot water). The second alternative is advantageous when employing a relatively cold air.

The simplest and most expedient way to employ air and used working fluid for cooling the heated working fluid involves separate admission of the flows of air and used working fluid with air flow conveyed between the flows of heated and used working fluid. This results in lowered losses for mixing because the air has dynamic parameters substantially higher than those of the used working fluid and provides space between the flows of used working fluid and heated working fluid whereby impact losses are substantially reduced. Also, this arrangement of the flows affords to more effectively equalize the temperature of flows being mixed.

In any of the heretofore described modifications of the proposed method it is advisable to cool air prior to admission to the mixing zone. This allows to reduce the cooling air demand and consequently to use a compressor of lower power. Such cooling can be done in any known suitable manner, such as by employing air of the second air circuit of aircraft turbo-jet engines.

In any of the above modifications of the proposed method it is possible and even expedient to use together with the liquid or instead of the liquid a vapor whose heat capacity is higher than the heat capacity of at least one of the components of the coolant of the heated working fluid. The accompanying advantages are higher heat capacity of the coolant, intensified mixing of the coolant with heated working fluid, and reduced susceptibility of hot turbine blades to drops of liquid after separation of flame in the source of working fluid. The aforedescribed method is carried out in a gas turbine engine represented in Figs. 2 to 5.

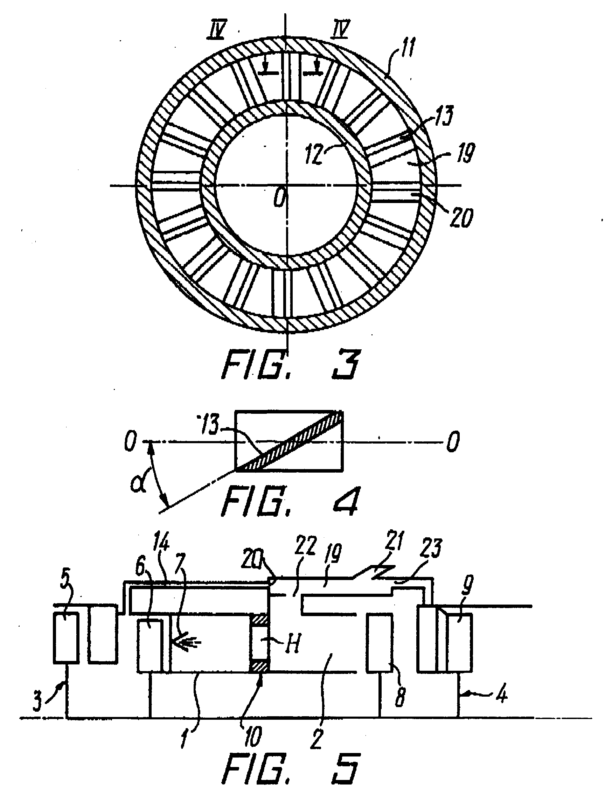

Referring now to Fig. 2 in which like parts are indicated by like numerals as in Fig. 1, compressor 3 has two stages 5, 6, source 1 of heated working fluid has a fuel nozzle 7 of any known suitable design for spraying the fuel to be burned, and turbine 4 has two stages 8, 9. The source 1 of heated working fluid has zone H for expanding and swirling the heated working fluid which accommodates arrangement 10 to expand and swirl the flow of heated working fluid generated in source 1 fashioned as an annular structure (Fig. 3) including a pair of concentric rings 11, 12 and guide vanes located between the rings and positioned at an angle to longitudinal axis 0-0 of the gas turbine engine (Fig. 4). Other alternative embodiments of nozzle diaphragm used as arrangement 10 for expanding and swirling the heated working fluid are possible. In any such embodiment the arrangement should change the thermodynamic conditions of the heated working fluid so as to cool it prior to admission to the first turbine stage 8.

The heated working fluid is cooled, as has been heretofore described, by air admitted to the mixing zone 2 under a pressure at least not below the pressure of heated working fluid in the mixing zone 2 of source 1 of heated working fluid. With the same aim in view the engine has a passage 14 one end of which communicates with outlet of the first stage 5 of compressor 3 and the other end communicates with the mixing zone 2 to ensure admission of cooling air to a zone located immediately before the inlet of first turbine stage 8. It stands to reason that the compressor can have any desired number of stages. In each specific instance it is desirable to determine from which stage the air is to be drawn to passage 14 for cooling the heated working fluid.

As has been described above, air can be admitted together with working fluid used in the first turbine stage. This is facilitated by passage 15 whose one end communicates with the outlet of first turbine stage 8 and the other with mixing zone 2. It is most advantageous that the mixing zone be provided with two inlets 16, 17 of which inlet 16 communicates with the outlet 5 of compressor 3 where the pressure is at least equal to the pressure of working fluid in mixing zone 2 and inlet 17 communicates with the outlet of first turbine stage 8. The first inlet 16 of mixing zone 2 communicates with section I of mixing zone 2 located between the longitudinal axis of the engine and second inlet 17 of the mixing zone. In the herein described embodiment it is reasonable to meet such conditions by providing two rows of holes forming inlets 16, 17 and a baffle 18 as seen best in Fig. 2. Here, part of baffle 18 and hole of source 1 of heated working fluid communicating with passage 14 define first inlet 16. Other alternative modified forms of inlets 16, 17, such as in the form of pipes located in corresponding sections of mixing zone 2, are also possible.

A modified form of gas turbine engine shown in Fig.5 where like parts are indicated by the same reference symbols as in Fig. 2 differs in that it is provided with an additional mixing zone 19 located outside the source 1 of heated working fluid and having at least two inlets 20, 21 communicating, respectively, with the outlet of stage 5 of compressor 3 where the pressure is at least equal to the pressure of working fluid in mixing zone 2 and with a source of liquid (not shown) whose vapors have a heat capacity higher than the heat capacity of air. Outlet 22 of the additional mixing zone 19 communicates with the mixing zone 2.

Referring again to Fig. 5, the additional mixing zone 19 has a third inlet 23 communicating with the outlet of first turbine stage 8 intended to convey the working fluid used in the first turbine stage to this mixing zone 19. The heated working fluid is cooled by a coolant which includes three components each performing its own specific function. Particularly, air is used as a low-temperature component, liquid as a fluid component of high heat capacity, and used working fluid is employed as a hightemperature component of high heat capacity. It is also possible to admit a steam of heat capacity higher than that of the used working fluid to inlet 21 of additional mixing zone instead of the liquid. This steam can also be admitted together with liquid.

The proposed gas turbine engine operates in the following manner. As a starting motor (not shown) starts the gas turbine engine, compressor 3 (Figs. 2-4) rotates to force compressed air from last stage 6 to the source 1 of heated working fluid to which a fuel is also fed through nozzle 7. By using any known suitable device (not shown) the fuel is ignited to be subjected to combustion and generate gases used as the heated working fluid. The flow of heated working fluid moves toward the expansion and swirl zone H where inclined vanes 13 (Figs. 3 and 4) facilitate expansion and swirling of the flow of heated working fluid. As a result, the heated working fluid gains kinetic energy, whereas swirling reduces the path of successive mixing of heated working fluid with coolant. In addition, swirling intensifies mixing of the heated working fluid with the coolant. Air is conveyed from first stage 5 of compressor 3 along passage 4 to the first inlet 16 of mixing zone 2. Used working fluid is conveyed from the outlet of first turbine stage 8 along passage 15 to the second inlet of mixing zone 2. Thanks to relative positioning of two inlets 16, 17, mixing zone 2 and provision of baffle 18 the flows of air, heated working fluid and used working fluid are mixed in the mixing zone 2 in a laminar manner. The air has a pressure and velocity substantially higher than those of the used working fluid to soften impact during mixing. This allows to reduce the demand of air for cooling, as it is partially replaced by the used working fluid.

The modified embodiment shown in Fig. 5 operates in a substantially similar manner, the difference being only in that air is mixed with liquid and/or used working fluid in the additional mixing zone 19 located outside the source 1 of heated working fluid which facilitates mixing due to extended mixing duration.

A gas turbine engine of 1500 hp employing the principle features of the present invention has the following technical characteristics:

| | |
|---|---|
| fuel consumption rate | 150-155 g/hp.h |
| dimensions (reduction gear included): | length 720 mm |
| | width 390 mm |
| | height 450 mm. |

The proposed gas turbine engine has a fuel consumption rate 30-35% lower than that of currently available engines of the same power. Other advantages include increased net power, lowered mass of compressor and reduced overall dimensions of compressor and engine.

### Industrial Applicability

The invention can be used in gas turbine engines employed in stationary power plants, as well as in power plants of wheeled vehicles, aircraft and ships.

## Claims

1. A method of converting heat into mechanical energy in a gas turbine engine having at least two turbine stages (8, 9) located in a flow-through passage and a source (1) of heated working fluid, in which the thermodynamic conditions of working fluid to be admitted to at least first turbine stage (8) are changed by expanding and swirling it relative to the longitudinal axis of the gas turbine engine followed by cooling of the working fluid with thus changed thermodynamic conditions, CHARACTERIZED in that the working fluid of changed thermodynamic conditions is cooled by air conveyed to the heated working fluid under a pressure at least equal to the pressure of heated working fluid with changed thermodynamic conditions.

2. A method as claimed in claim 1, CHARACTERIZED in that prior to admission of cooling air the air is mixed with liquid whose vapors have a heat capacity higher than the heat capacity of air.

3. A method as claimed in claim 1, CHARACTERIZED in that prior to admission of cooling air the air is mixed with used working fluid of the first turbine stage.

4. A method as claimed in claims 1, 2, CHARACTERIZED in that prior to admission of cooling air the air is mixed with vapor whose heat capacity is higher than heat capacity of the air.

5. A method as claimed in claim 3, CHARACTERIZED in that prior to admission of cooling air the air is mixed with a liquid whose vapors have a heat capacity higher than the heat capacity of the air.

6. A method as claimed in claims 3, 5, CHARACTERIZED in that prior to admission of cooling air the air is mixed with a vapor whose heat capacity is higher than the heat capacity of the air.

7. A method as claimed in claim 3, CHARACTERIZED in that prior to admission of used working fluid of the first turbine stage for mixing with air conveyed for cooling the used working fluid of the first turbine stage is mixed with a liquid whose vapors have a heat capacity higher than the heat capacity of the used working fluid.

8. A method as claimed in claims 3, 7, CHARACTERIZED in that prior to admission of the used working fluid of the first turbine stage for mixing with air conveyed for cooling the used working fluid of the first turbine stage is mixed with a vapor whose heat capacity is higher than the heat capacity of the used working fluid.

9. A method as claimed in claim 1, CHARACTERIZED in that the working fluid is cooled by air and used working fluid of the first turbine stage, the flows of air and used working fluid being admitted separately, and the flow of air is conveyed between the flows of heated and used working fluid.

10. A method as claimed in claims 1 to 9, CHARACTERIZED in that the air is cooled prior to admission to the mixing zone.

11. A gas turbine comprising at least two turbine stages (8, 9) located in a flow-through passage, at least a two-stage compressor (3), and a source (1) of heated working fluid having a zone (H) for expanding and swirling the heated fluid and a zone for mixing the heated working fluid with a coolant located after the zone (H), CHARACTERIZED in that the zone (2) of mixing the heated working fluid with coolant communicates with an outlet of compressor stage (5) where the pressure is at least equal to the pressure of heated working fluid in the mixing zone (2).

12. A gas turbine as claimed in claim 11, CHARACTERIZED in that it has an additional mixing zone (19) located outside the source (1) of heated working fluid having two inlets (20, 21) of which the first such inlet (20) communicates with outlet of compressor stage (5) where the pressure is at least equal to the pressure of working fluid in the mixing zone (2) and the second inlet (21) communicates with a source of liquid whose vapors have a heat capacity higher than the heat capacity of the air, and an outlet (22) communicating with the mixing zone.

13. A gas turbine engine as claimed in claim 12, CHARACTERIZED in that inlet (23) of additional mixing zone (19) communicates with outlet of the first turbine stage.

14. A gas turbine engine as claimed in claim 11, CHARACTERIZED in that the zone (19) of mixing the heated working fluid with coolant has two inlets (21, 22) of which the first inlet communicates with outlet of stage (5) of compressor (3) where the pressure is at least equal to the pressure of working fluid in the mixing zone (2) and the second inlet communicates with turbine stage (8), the first inlet (20) of mixing zone (2) communicating with a section of mixing zone (20) located between the longitudinal axis of the mixing zone and second inlet (21) of the mixing zone.
